# EUROPEAN PATENT APPLICATION

(11) **EP 4 670 594 A1**
(43) Date of publication of application: **31.12.2025**
(21) Application number: 24759819.6
(22) Date of filing: 22.02.2024
(51) Int. Cl.: A47K 3/40, E03C 1/04, F28D 21/00

(54) **HEAT RECOVERY SYSTEM FOR A SHOWER TRAY, BATHTUB OR SIMILAR AND SHOWER TRAY PROVIDED WITH SAID SYSTEM**

(30) Priority: 24.02.2023 ES 202330301 U
(71) Applicant: Cerian Shower, S.L., 46680 Algemesí (Valencia) (ES)
(72) Inventor: GONZALEZ VALIENTE, César, 46680 Algemesí (VALENCIA) (ES)
(74) Representative: Isern Patentes y Marcas S.L.
(86) International application number: PCT/ES2024/070107
(87) International publication number: WO 2024/175825

(57) **Abstract**

The invention relates to a heat recovery system for a shower tray, bathtub or similar, comprising a heat exchanger provided to bring about a heat transfer between a flow of water to be supplied to the shower and the flow of water coming from the shower. It comprises a top cover, and a heat exchanger located between the top cover and the top surface of the shower tray, bathtub or similar, with the heat exchanger being formed of a body made of stainless steel, and a water outlet port, such that the outlet port is linked to a flow of water exiting through the shower.

## Description

### Object of the invention

The present invention relates to a heat recovery system for a shower tray, bathtub or similar, as well as a shower tray provided with said system.

More specifically, the invention is directed to the construction sector and proposes the development of a heat recovery system for a shower tray that allows energy savings in the heating of the hot water consumed.

### Background of the invention

There is currently an ongoing search for the development of systems and devices that improve energy efficiency in homes. For this purpose, heat recovery devices provided for sanitary installation, such as shower trays and bathtubs, are known, which aim to reduce the energy consumed in heating sanitary water intended for such uses.

Examples of devices of this type are described, for example, in documents ES 2641283, ES 1158883, NL 1014215 and NL 1032458, which have a heat exchanger medium (consisting of plates or coils) underneath the surface of the shower tray or forming part of it. Although these systems satisfactorily fulfil the energy saving function, in practice they involve an increase in the height of the shower tray itself, which can worsen ergonomics as this entails difficulties for users with mobility problems. For this reason, there is still a need to find a system that solves the above problem.

Furthermore, the applicant is currently unaware of any invention that has all of the features described in this specification.

### Summary of the invention

The present invention has been developed with the aim of providing a heat recovery system that is configured as a novelty within the field of application and solves the previously mentioned drawbacks, further contributing other additional advantages that will become apparent from the description below.

An object of the present invention is therefore to provide a heat recovery system for a shower tray, bathtub or similar, of the type comprising a heat exchanger provided to bring about a heat transfer between a flow of water to be supplied to the shower and the flow of water coming from the shower (also called grey water). Particularly, the invention is characterised in that it comprises a top cover consisting of a preferably solid laminar body, which is provided with a plurality of faces with a degree of inclination in a downward direction from the central part towards the sides, which are provided to guide the flow of water coming from the shower towards the sides of the top cover, and a heat exchanger located between the top cover and the top surface of the shower tray, bathtub or similar. The heat exchanger consists of a defined body made of stainless steel that is hollow inside and provided with walls internally defining a chamber provided for the passage of water, the heat exchanger having a water inlet port for water to be supplied and a water outlet port, so that the outlet port is linked to the water exiting through the shower. The body of the heat exchanger comprises a plurality of top faces with a degree of inclination downwards from the outside of said top faces towards the centre where a through hole provided for the outlet of the water coming from the shower is located.

The top cover acts as a protective member and covers the entire length of the heat exchanger, so that the system is hidden, protected from dirt or external agents, and the heat exchanger is avoided to be stepped by the user.

According to another aspect of the invention, it is provided with a slotted portion running between the perimeter of the top cover and the hollow defined in the shower tray where the heat exchanger is housed. In this way, the grey water coming from the top cover is distributed over the entire top face of the heat exchanger, ensuring maximum contact surface between the grey water and the faces on the top of the heat exchanger.

Due to these characteristics, an energy saving system is obtained that is easy to install as it does not require, for example, carrying out works for its assembly, and it does not entail a greater height of the shower tray or similar that could be uncomfortable for the user, especially for those with mobility problems, such as elderly users.

Likewise, this system allows integration with a single design in any shower tray manufacture, as it will always have the same dimensions regardless of the length and width of the shower platform.

The reduced height can be obtained because the drainage point is in the centre and the distance travelled by the grey water (i.e., the water exiting through the shower) is shorter from the perimeter to the centre than from one side to the other.

Another object of the invention is to provide a shower tray comprising a body provided with a recessed portion in which the aforementioned heat recovery system is housed.

Thus, the heat recovery system described represents an innovative structure with structural and constituent features heretofore unknown for its intended purpose, reasons which, taken together with its usefulness, provide it with sufficient grounds for obtaining the requested exclusivity privilege.

Other features and advantages of the heat recovery system object of the present invention will become apparent from the description of a preferred, but not exclusive, embodiment which is illustrated by way of non-limiting example in the attached drawings, in which:

### Brief description of the drawings

Figure 1 shows a schematic perspective view of a shower tray installation provided with the heat recovery system according to the present invention;

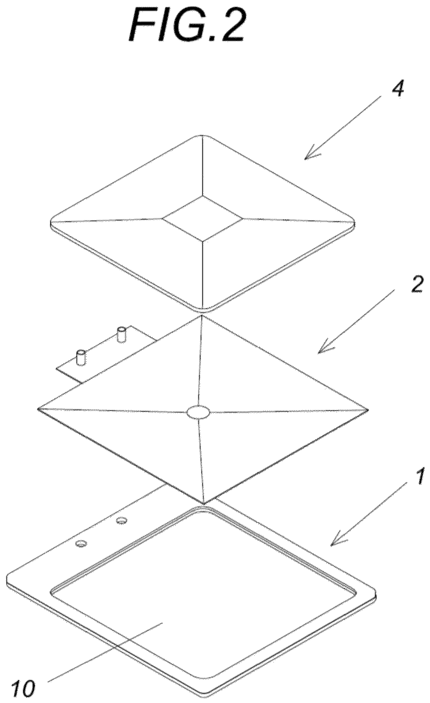

Figure 2 shows an exploded perspective view of the recovery system for a shower tray;
Figure 3 shows a partially sectioned exploded perspective view of the shower tray installation provided with the system of the invention;
Figure 4 shows a perspective view of the top cover; and
Figure 5 shows a perspective view from above and from the bottom of the heat exchanger.

### Description of a preferred embodiment

In view of the aforementioned figures, and in accordance with the adopted numbering, a preferred exemplary embodiment of the invention is disclosed, which comprises the parts and elements indicated and described in detail below.

Moreover, the terms first, second, third, and the like in the description and in the claims are used to distinguish between similar elements and not necessarily to describe a sequential or chronological order. The terms may be interchanged under appropriate circumstances and the embodiments of the invention may operate in sequences other than those described or illustrated herein.

Moreover, the terms upper, lower, up, down, and the like in the description and in the claims are used for descriptive purposes and not necessarily to describe relative positions.

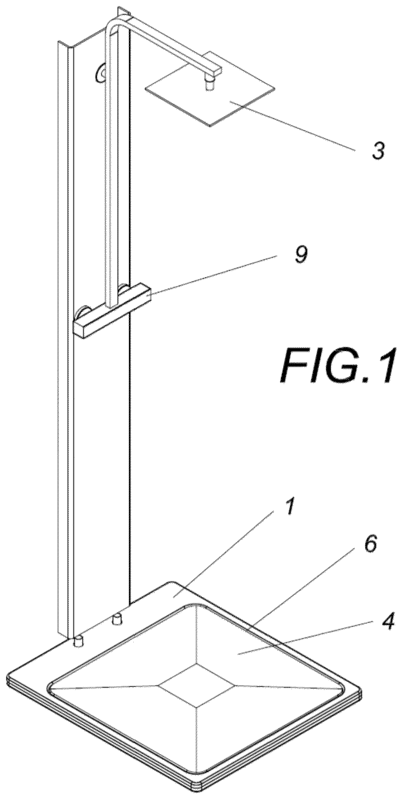

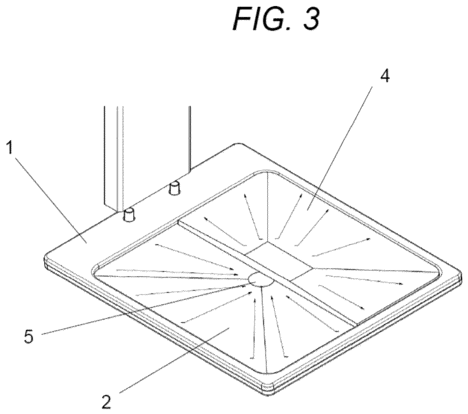

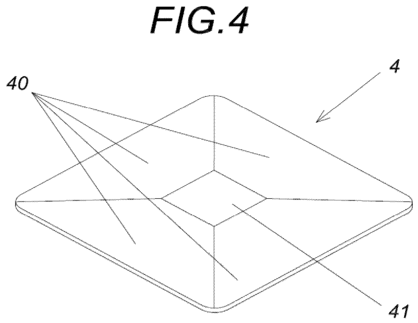

As can be seen in figures 1 and 3, the heat recovery system for a shower tray (1), comprising a heat exchanger (2) (described in more detail below) provided to bring about a heat transfer between a flow of water to be supplied to the shower and the flow of water coming from the shower (3). The system further comprises a top cover (4) corresponding to the contact surface with the user, consisting of a solid laminar body, with a general truncated pyramid shape, the top of which is segmented by four top faces (40) with a degree of inclination in a downward direction from a flat central part (41) with a quadrangular plan towards the sides (see figure 4), so that these top faces (40) are provided to guide the flow of water coming from the shower (3) towards the sides of the top cover (4).

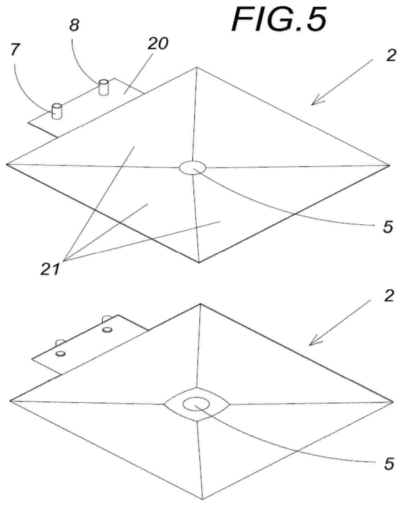

The system further includes the heat exchanger (2) located between the top cover (4) and the top surface of the shower tray (1) so that it is completely covered by the top cover (4). As can be seen more clearly in figure 5, the heat exchanger essentially consists of a defined body made of stainless steel that is hollow inside and provided with walls internally defining a chamber provided for the passage of water, the heat exchanger (2) having on one side an extension (20) with a water inlet port for water to be supplied (7) and a water outlet port (8), so that the outlet port (8) is linked to the water exiting through the shower through tubular connections (not shown) with a conventional tap (9) (shown schematically in the drawings).

In this way, the heat exchanger (2) acts between the grey water coming from the shower and the water to be supplied, to transfer the heat from the grey water to the water to be supplied. Thus, during the operation of a conventional shower, a flow of water at 9°C is supplied through the inlet port (7) into the heat exchanger (2) and after circulating inside the chamber of the heat exchanger (2) it is directed to the outlet port (8), so that it exits through the outlet port (8) at a temperature of 21°C after indirect contact with the grey water exiting through the shower (3) at 38°C.

It should be noted that the body of the heat exchanger (2) comprises a plurality of top faces (21) (four faces in this example) with a degree of inclination from the outside towards the centre where a hole (as a drain (5)) provided for the outlet of the water coming from the shower is located, acting as a guiding system for the flow of grey water towards the drain (5) located in the central part thereof.

Furthermore, a slotted portion (6) is provided that runs between the perimeter of the top cover and the hollow or recessed portion (10) present in the shower tray (1) where the heat exchanger is housed.

As can be seen in the figures, the aforementioned top cover (4) specifically comprises four flat faces inclined downwards from a central flat section towards the sides.

The walls defining the heat exchanger (2) have a thickness between 0.4 and 0.6 mm, while the internal chamber present in the body of the heat exchanger can have a height between 1 and 3 mm, so that the total height of the heat exchanger (2) is between 2 and 4 mm.

The details, shapes, dimensions and other accessory elements, used to manufacture the recovery system of the invention, may be suitably replaced with others which do not depart from the scope defined by the claims which are included below.

## Claims

1. A heat recovery system for a shower tray, bathtub or similar, comprising a heat exchanger provided to bring about a heat transfer between a flow of water to be supplied to the shower and the flow of water coming from the shower, **characterised in that** it comprises:
a top cover consisting of a solid laminar body provided with faces with a degree of inclination in a downward direction from the central part towards the sides, provided to guide the flow of water coming from the shower towards the sides of the top cover, and
a heat exchanger located between the top cover and the top surface of the shower tray, bathtub or similar, the heat exchanger consisting of a body made of stainless steel that is hollow inside and provided with walls internally defining an internal chamber provided for the circulation of a flow of water, the heat exchanger having a water inlet port for water to be supplied and a water outlet port, so that the outlet port is linked to a flow of water exiting through the shower, and wherein the body of the heat exchanger comprises a plurality of top faces with a degree of inclination downwards from the outside of said faces towards the centre where a through hole provided for the removal of the water coming from the shower is located.

2. The heat recovery system according to claim 1, **characterised in that** it is provided with a slotted portion running between the perimeter of the top cover and the hollow defined in the shower tray where the heat exchanger is housed.

3. The heat recovery system according to any of the preceding claims, **characterised in that** the top cover comprises four flat faces inclined downwards from a central flat section towards the sides.

4. The heat recovery system according to any of the preceding claims, **characterised in that** the heat exchanger comprises four top faces inclined downwards from their sides towards the centre.

5. The heat recovery system according to claim 1, **characterised in that** the walls defining the heat exchanger have a thickness between 0.4 and 0.6 mm.

6. The heat recovery system according to claim 1, **characterised in that** the internal chamber present in the body of the heat exchanger has a height between 1 and 3 mm.

7. A shower tray comprising a body provided with a recessed portion in which the recovery system according to any of claims 1 to 6 is housed.
